# EUROPEAN PATENT APPLICATION

(11) **EP 1 679 490 A1**
(43) Date of publication of application: **12.07.2006**
(21) Application number: 05000283.1
(22) Date of filing: 07.01.2005
(51) Int. Cl.: G01C 21/20

(54) **Vehicle navigation system**

(71) Applicant: HONDA MOTOR CO., Ltd., Tokyo (JP)
(72) Inventor: Funayose, Yusuke, 4-1, Chuo 1-chome Wako-shi Saitama (JP); Fukui, Kunihiko, 4-1, Chuo 1-chome Wako-shi Saitama (JP)
(74) Representative: Rupp, Christian

(57) **Abstract**

To provide a vehicle navigation system which can accurately display a position of a vehicle with the navigation system mounted thereon and a target direction even when the vehicle is stopped or traveling at low speed.

A vehicle navigation system includes a unit sensing a traveling state of a vehicle, a unit judging whether or not the vehicle is stopped or traveling at low speed, and a unit smoothing GPS positioning data so that error components contained in the GPS positioning data are canceled with each other or compensated when the vehicle is stopped or traveling at low speed. The navigation system further includes a unit calculating the current position based on the smoothed GPS positioning data. The smoothing unit outputs new positioning data, for example, based on current GPS positioning data and previous GPS positioning data.

## Description

The present invention relates to a vehicle navigation system. Specifically, the present invention relates to a vehicle navigation system which receives radio waves from satellites and recognizes a current position of a vehicle having the navigation system mounted thereon.

A GPS navigation system utilizing an artificial satellite has hitherto been used as a navigation system for various mobile bodies such as automobiles, airplanes, and ships. A GPS receiver used in this GPS navigation system is configured to receive radio waves from a plurality of GPS satellites, measure a receiving point from data of a pseudorange between each of the GPS satellites and the receiving point and a position data of each GPS satellite, and output GPS positioning data. Herein, the pseudorange contains a time offset of the receiver. However, the GPS positioning accuracy includes error components because of the following reasons:
(1) The accuracy is reduced because of an error occurring while radio waves pass through the ionosphere.
(2) The accuracy is reduced because of a multipath phenomenon in which signal radio waves from the satellites are mixed with components of signals reflected from the ground, buildings, mountains, and the like. The accuracy changes with time as the state of such obstacles changes with time.

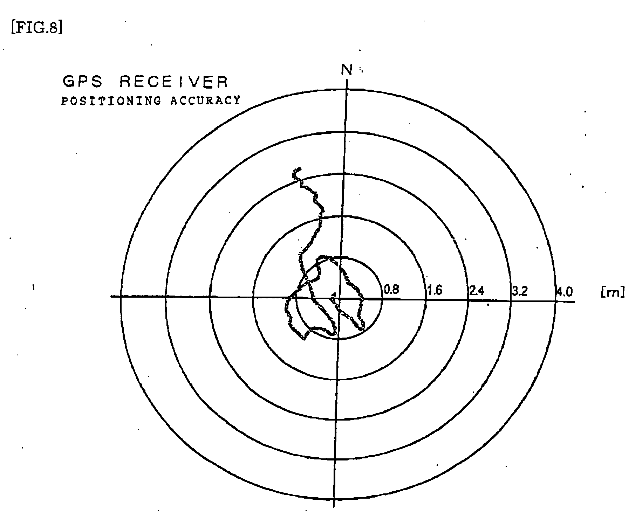

Therefore, a simple navigation system with no autonomous navigation unit mounted thereon includes a technical problem that a pointer on a screen indicating a current position of a vehicle having the navigation system mounted thereon moves while the vehicle is stopped. FIG. 8 is a view showing temporal transition of the current position obtained by GPS positioning calculation while the vehicle is stopped.

For such a technical problem, the Japanese Patent Laid-Open publication No. 63-238479 discloses a technique preventing the indicator of the current position from moving while the vehicle is stopped. In this technique, current position information obtained by GPS positioning means is ignored when vehicle stop detecting means detects that the vehicle is stopped.

The aforementioned disadvantage due to the GPS positioning error can occur while the vehicle is traveling at low speed in a traffic jam or the like as well as while the vehicle is stopped. Therefore, if the current position information is ignored only when it is detected that the vehicle is stopped, wrong position information is displayed while the vehicle is traveling at low speed.

If the aforementioned conventional technique is not only applied to the time when the vehicle is stopped but also extended to the time when the vehicle is traveling at low speed, there is a technical problem that the last determined current position greatly differs from the actual current position if the vehicle continues to travel at low speed.

An object of the present invention is to solve the aforementioned problems of the conventional art and to provide a vehicle navigation system which can accurately recognize the position and the target direction of a vehicle having the navigation system mounted thereon even while the vehicle is stopped or traveling at low speed.

In order to achieve the aforementioned object, the present invention is a vehicle navigation system executing GPS positioning calculation based on radio waves transmitted from a plurality of GPS satellites to obtain a current position based on positioning data. The vehicle navigation system is characterized by including: a unit sensing a traveling state of a vehicle; a unit judging based on a result of the sensing whether a travel speed of the vehicle is less than a reference speed; a unit smoothing GPS positioning data when the travel speed is judged to be less than the reference speed; and a unit calculating current position based on the smoothed GPS positioning data.

According to the aforementioned aspect, while the vehicle is stopped or traveling at low speed, at the time when errors of the GPS positioning data greatly affect on display of the current position, the GPS positioning data is smoothed, and error components are canceled with each other or compensated. Therefore, the current position can be accurately recognized.

Moreover, the current position can be recognized by executing the GPS positioning calculation even when the vehicle is traveling at low speed. Accordingly, guidance is possible even when the vehicle is forced to travel at low speed at the time of being stuck in a traffic jam or the like.

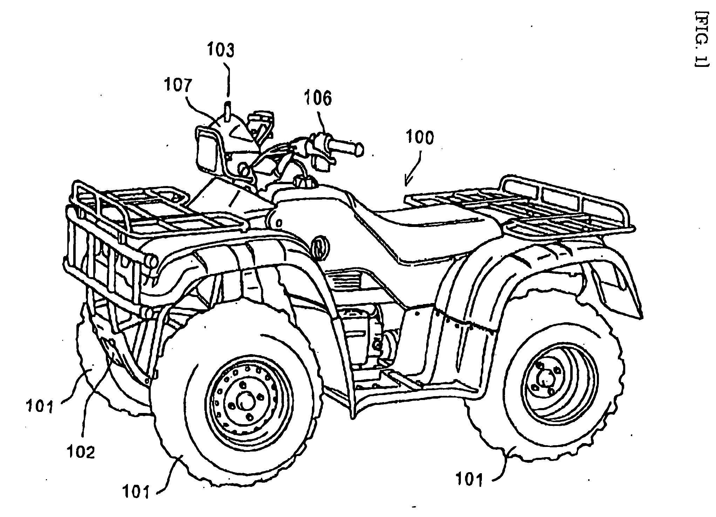

Hereinafter, a description will be given of an embodiment of the present invention in detail with reference to the drawings. FIG. 1 is a perspective view showing a saddle type buggy 100 for rough terrain on which a vehicle navigation system of the present invention is mounted. Same reference numerals as those described above denote the same or similar members.

The ATV of the present invention offers hill-climbing ability and off-road ability by using large-diameter wheels 101, an under cover 102, a four-wheel drive mechanism, and the like. A meter unit 107 is provided in the center of a handle 106, and a helical-type or patch-type GPS receiver antenna 103 stands toward the sky on the upper part of the meter unit 107. The saddle-type buggy 100 is frequently used in rough terrain where the attitude of a traveling vehicle largely changes, but GPS radio waves can be well received irrespective of the changes in the attitude by employing a helical antenna with low directivity as the receiver antenna 103.

FIG. 1 is a perspective view showing a saddle-type buggy for rough terrain on which a vehicle navigation system of the present invention is mounted.
FIG. 2 is a block diagram showing a configuration of a main portion of the vehicle navigation system according to the present invention.
FIG. 3 is a view schematically expressing storage contents of a WP memory.
FIG. 4 is a view showing a display example (NAVI mode) of a display panel.
FIG. 5 is a view showing a display example (NAVI mode) of the display panel.
FIG. 6 is a view showing a state where the_display examples of the display panel change in response to operations of a MODE switch.
FIG. 7 is a flowchart showing an operation of the embodiment.
FIG. 8 is a view showing temporal transition of a current position obtained by GPS positioning calculation while a vehicle is stopped.
FIG. 2 is a block diagram showing a configuration of a main portion of a navigation system 1 mounted on the buggy 100. The navigation system is a simple type which does not include an autonomous navigation system mounted thereon and calculates the current position based on GPS positioning data.

A GPS receiver 2 periodically receives GPS signals transmitted from a plurality of artificial satellites. A vehicle speed sensor 3 senses a travel speed of the vehicle with the navigation system 1 mounted thereon based on revolutions of the wheels. The GPS receiver 2 and the vehicle speed sensor 3 are connected to a system bus 13 with a serial interface 11 interposed therebetween.

A CPU 10 calculates the current position (latitude and longitude) of the vehicle with the navigation system mounted thereon and the current time based on a plurality of GPS signals received by the GPS receiver 2 and senses the travel direction based on a history of the current position and the information acquired from the vehicle speed sensor 3. The CPU 10 further calculates relative positional relationship between a way point (WP) which is already registered in a way point (WP) memory 12 and its own current position. A RAM 17 offers a work area for the CPU 10.

A display control circuit 19 outputs the direction and the distance of the WP from the current position and the like to a display panel 6 of the meter unit 107. Switches 65, 66, 67a, and 67b of the display panel 6 are individually connected to the system bus 13 with a parallel interface 15 interposed therebetween.

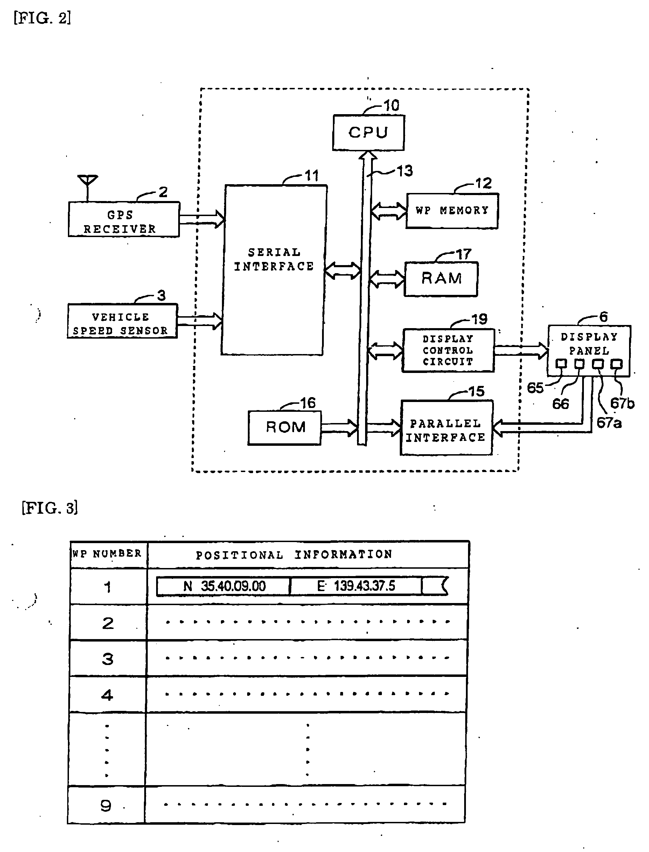

FIG. 3 is a view schematically expressing storage contents of the WP memory 12. Storage areas are reserved for respective WP numbers, which are information identifying WPs, and each of the storage areas stores the latitude and longitude of each WP as positional information of the WP.

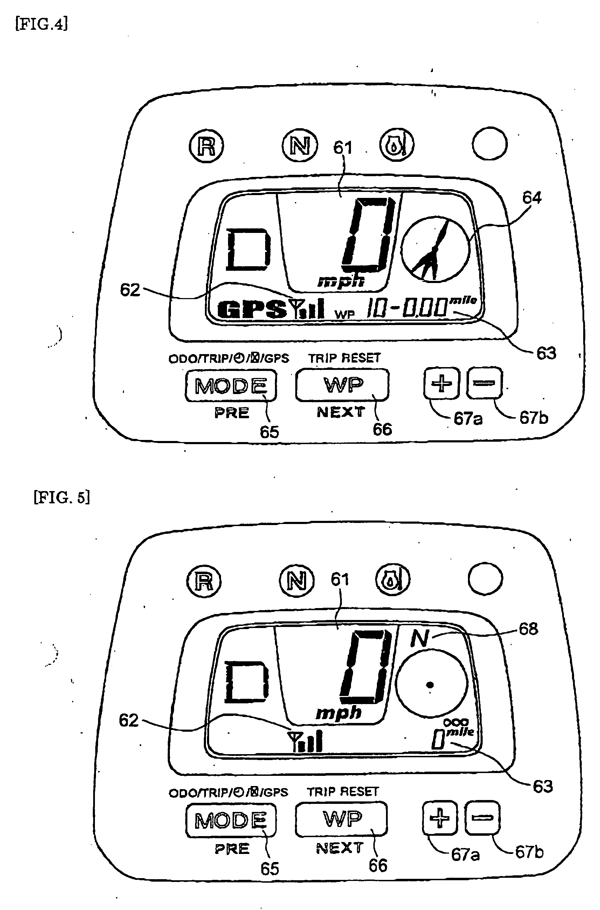

FIGS. 4 and 5 are views showing display examples of the display panel 6. Same reference numerals as those described above denote the same or similar members.

The navigation system of the embodiment is provided with a "NAVI mode" indicating the direction of a WP or the final destination in each of 16 directions and a "compass mode" indicating the travel direction in each of eight directions.

In the NAVI mode, as shown in FIG. 4, a vehicle speed display area 61, a positioning state display area 62, and a direction display area 64 are displayed. In the positioning state display area 62, a GPS positioning state is displayed. In the direction display area 64, the direction of a WP or the final destination is indicated by an arrow in each of 16 directions. A number of a WP currently selected and a distance to the WP are displayed in a multi-display area 63.

In the compass mode, as shown in FIG. 5, the vehicle speed display area 61, the positioning state display area 62 where the GPS positioning state is displayed, and a compass display area 68 are displayed. In the compass display area 68, a current travel direction is indicated by each of eight directions (north [N], northeast [NE], east [E], southeast [SE], south [S], southwest [SW, west [W], northwest [NW]). In the multi-display area 63, an odometer (ODO), a tripmeter (TRIP), elapsed time (HOUR), and the current time are selectively displayed.

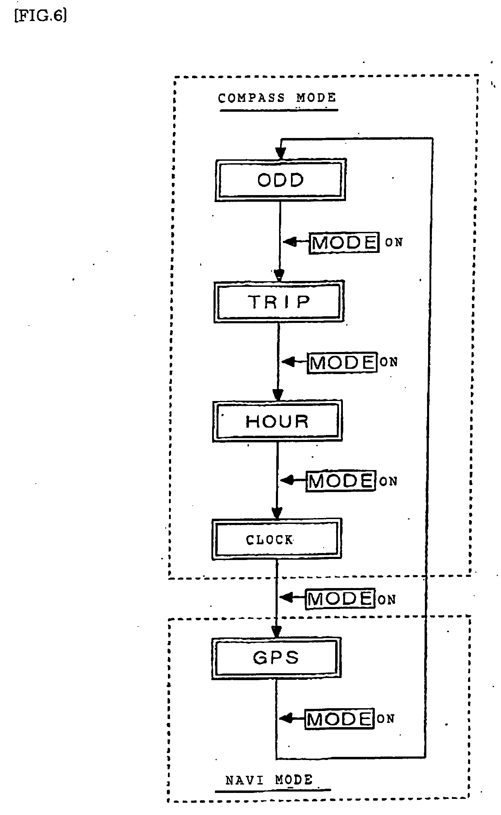

FIG. 6 is a view showing a state where the display examples of the display panel 6 change in response to operations of the MODE switch 65. For example, when the MODE switch 65 is operated in a state of the compass mode where the ODO is displayed, only the display in the multi-display area 63 is sequentially changed to TRIP display, to HOUR display, and to clock display while being in the compass mode. When the MODE switch 65 is further operated, the compass mode is changed to the NAVI mode. When the MODE switch 65 is operated in the NAVI mode, the display is returned to the ODO display state of the compass mode.

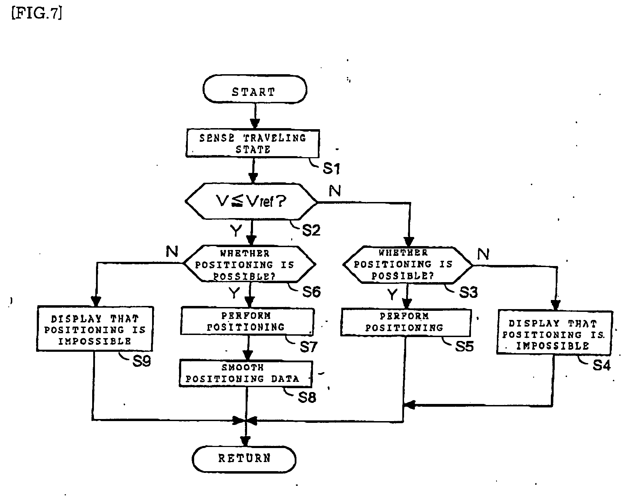

FIG. 7 is a flowchart showing a procedure to recognize the current position in the embodiment, mainly showing a procedure of a process which the CPU 10 executes according to a control program stored in the ROM 16.

In step S1, the traveling state of the vehicle is sensed based on a pulse signal detected by the vehicle speed sensor 3. In step S2, it is judged based on the sensed traveling state whether the travel speed V of the vehicle is less than a reference speed Vref. When the travel speed V is not less than the reference speed Vref, the procedure proceeds to step S3, and it is judged whether positioning based on the GPS signals is possible. When the vehicle is traveling in a tunnel or in a mountainous area and cannot receive any GPS signals, the procedure proceeds to step S4. In the step S4, a sign indicating that positioning is impossible is displayed in the positioning state display area 62. On the contrary, when it is judged that the positioning is possible in the step S3, the procedure proceeds to step S5, and the current position is determined based on the GPS signals. The obtained positioning data is used to calculate the travel direction in the compass mode and used to display the direction of the destination with an arrow in the NAVI mode.

On the contrary, when the travel speed V is judged to be less than the reference speed Vref in the step S2, the procedure proceeds to step S6, and it is judged whether positioning based on the GPS signals is possible in the same manner as the step S3. When the positioning is impossible, the procedure proceeds to step S9, and the sign indicating the state where the positioning is impossible is displayed in the positioning state display area 62 like in the step S4.

On the contrary, when it is judged in the step S6 that the positioning is possible, the procedure proceeds to step S7, and the current position is determined based on the GPS signals. In step S8, the positioning data is filtered, and a smoothing process is then executed to reduce effects of variation in the filtered positioning data. In the embodiment, an average value of positioning data P obtained in previous positioning operations and current positioning data P0 is calculated as new positioning data. At this time, it is possible to employ weighted average with which priority is given to the previous positioning data P or to the current positioning data P0 vice versa.

As described above, according to the embodiment, if the travel speed V is less than the reference speed Vref as in the case where the vehicle is stopped or traveling at low speed, the current position is calculated based on the positioning data for the positioning operation more than once without employing the current positioning data P0 as it is. Accordingly, the current position can be comparatively accurately calculated even if the positioning data contains an error. Therefore, in the compass mode, the display of the travel direction can be prevented from changing while the vehicle is stopped. In the NAVI mode, the display of the destination direction can be prevented from changing while the vehicle is stopped.

Furthermore, according to the embodiment, the current position can be recognized by executing the GPS positioning calculation even while the vehicle is traveling at low speed. Accordingly, guidance is possible even when the vehicle is forced to travel at low speed at the time of being stuck in a traffic jam or the like.

According to the present invention, the following effects can be achieved.
(1) The GPS positioning data is smoothed so that error components are canceled with each other or compensated while the vehicle is stopped or traveling at low speed, at the time when the errors of the GPS positioning data greatly affect on the display of the current position. Accordingly, the current position can be accurately recognized.
(2) The current position can be recognized by executing the GPS positioning calculation even when the vehicle is traveling at low speed. Accordingly, guidance is possible even when the vehicle is forced to travel at low speed at the time of being stuck in a traffic jam or the like.

## Claims

1. A vehicle navigation system executing GPS positioning calculation based on radio waves transmitted from a plurality of GPS satellites to obtain a current position based on positioning data, the vehicle navigation system comprising:
a unit sensing a traveling state of a vehicle;
a unit judging based on a result of the sensing whether a travel speed of the vehicle is less than a reference speed;
a unit smoothing GPS positioning data when the travel speed is judged to be less than the reference speed; and
a unit calculating the current position based on the smoothed GPS positioning data.

2. The vehicle navigation system according to claim 1, wherein the smoothing unit smoothes the positioning data based on current GPS positioning data and previous GPS positioning data.
